(19) Europäisches Patentamt
European Patent Office
Office européen des brevets

(11) **EP 2 009 398 A2**

(12) **EUROPEAN PATENT APPLICATION**

(43) Date of publication:
**31.12.2008 Bulletin 2009/01**

(51) Int Cl.:
**G01C 21/28** (2006.01)    **G01S 5/14** (2006.01)
**G06K 9/00** (2006.01)

(21) Application number: **08158143.1**

(22) Date of filing: **12.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.06.2007 JP 2007171892**

(71) Applicant: **Aisin AW Co., Ltd.**
**Anjyo-shi**
**Aichi 444-1192 (JP)**

(72) Inventors:
• **Nakao, Koichi**
  **Okazaki-shi Aichi 444-8564 (JP)**
• **Nakamura, Masaki**
  **Okazaki-shi Aichi 444-8564 (JP)**
• **Ishikawa, Tomoaki**
  **Okazaki-shi Aichi 444-8564 (JP)**
• **Kanba, Motoki**
  **Okazaki-shi Aichi 444-8564 (JP)**
• **Aisaka, Osamu**
  **Okazaki-shi Aichi 444-8564 (JP)**

(74) Representative: **TBK-Patent**
**Bavariaring 4-6**
**80336 München (DE)**

(54) **Vehicle-position-recognition apparatus and vehicle-position-recognition program**

(57)    A history-information-generation unit (15) generating travel-history information indicating a route where a vehicle travels at a link-branch point based on a link determined by a link-determination unit (13) determining a link where the vehicle travels based on vehicle-position information and first and second road information items is provided. An image-recognition unit (16) recognizing the image of a recognition target on which data is included in image information about the vehicle's surroundings is provided. The travel-history information is stored in a learning database (DB2) in association with recognition information showing the recognition result of the recognition target. A learning unit (18) generates learning-priority information indicating the priority of each link based on the travel-history information and the recognition information for the link-determination unit (13) selecting the link where the vehicle travels from among links branched out at the branch point.

FIG. 1

**Description**

INCORPORATION BY REFERENCE

The disclosure of Japanese Patent Application No. 2007-171892 filed on June 29, 2007, including the specification, drawings and abstract thereof, is incorporated herein by reference in its entirety.

BACKGROUND OF THE INVENTION

1. Field of the Invention

The present invention is used for a navigation apparatus or the like and related to a vehicle-position-recognition apparatus configured to recognize the position of a vehicle.

2. Description of the Related Art

Technologies for displaying the position of the vehicle, providing guidance on the route to a destination, etc. by using road-map data showing information about actual roads in a navigation apparatus or the like have been available. The above-described road-map data including digital data is provided with road-network data including data on a combination of nodes and links. Usually, the node is coordinates indicating an intersection of roads, a corner, etc. The link connects the nodes to each other. Consequently, a road network showing roads based on connection relationships between plural links is achieved. Each of the links is provided with link information showing the attribute thereof. The attribute denotes, for example, the link number, the coordinates of each of a start-point node and an end-point node of a link, the link length, the genre and/or the type of a road, the road width, traffic regulation, etc.

The navigation apparatus acquires information about the position of the vehicle by performing satellite navigation using a global-positioning system (GPS), autonomous navigation using an on-vehicle sensor, etc., and maps data on the vehicle position on the road-map data. However, on a narrow-angle-branch road which is branched out at a relatively small angle, the vehicle-position data is often mapped on a road different from a road where the vehicle actually travels due to an error of the satellite navigation and/or the autonomous navigation. In the navigation apparatus, the vehicle-position data is superimposed and displayed on the road-map data. However, when the displayed road-map data shows a position different from the actual position of the vehicle, the driver of the vehicle is often confused.

Japanese Unexamined Patent Application Publication No. 2005-292082 (the second to the twelfth paragraphs, etc.) proposes a technology to change the accuracy of position measurement with high precision, the position measurement being performed by a receiver used to perform the satellite navigation, so as to increase the accuracy of recognition of the vehicle position at a narrow-angle branch. According to Japanese Unexamined Patent Application Publication No. 2005-292082, erroneous mapping previously caused due to the position-measurement error can be reduced through the use of a high-precision position-measurement unit which is under study, so as to be introduced in the future. Further, Japanese Unexamined Patent Application Publication No. 2006-017644 (the sixteenth to the twenty-fourth paragraphs, etc.) discloses a navigation apparatus configured to determine which of branched roads the vehicle currently travels based on a threshold speed to the vehicle speed, the threshold speed being determined based on the speed limit of a branch route and/or the state of a direction indicator used to make a lane change.

On the other hand, the navigation apparatus has other functions, namely, providing guidance on the route to a destination, presenting information related to the route, etc. For example, the navigation apparatus provides guidance on stations existing on a road, a resting place such as a service area, the next interchange, etc. When data on the destination is transmitted to the navigation apparatus, the route of the vehicle is calculated based on the destination data so that the above-described guidance can be easily provided. On the other hand, when the destination data is not transmitted to the navigation apparatus, data on a virtual target area is calculated based on the travel of the vehicle and the information corresponding to a route to the virtual target area is provided. If a road is branched out when determining the above-described virtual target area, it becomes difficult to predict the virtual target area ahead of the branches of the road. Japanese Unexamined Patent Application Publication No. 2006-284254 (the second to seventh paragraphs, the forty-third to fifty-ninth paragraphs, etc.) proposes a course-prediction method used to predict and provide a course leaving a branched road based on the travel history of a driver at the branched road. A virtual target area is predicted based on the predicted leaving course and the information corresponding to the route to the target area is provided.

SUMMARY OF THE INVENTION

If the vehicle position is measured at a high precision at the narrow-angle branch, as is the case with the technology disclosed in Japanese Unexamined Patent Application Publication No. 2005-292082, the erroneous mapping can be significantly reduced. However, a high-precision position-measurement unit and/or system is expensive and increases the cost of the navigation apparatus itself. The use of the technology disclosed in Japanese Unexamined Patent Application Publication No. 2006-017644 allows for increasing the accuracy of determining a road, that is, a link on the narrow-angle branch. However, the vehicle speed, the state of the direction indicator, etc. may be used in various combinations according to the place of the branch point, the driver's operation, etc. Further, since vehicle information other than information used to perform the satellite navigation and/or the autonomous navigation is used, calculations performed by the navigation apparatus may become complicated.

The course-prediction method disclosed in Japanese Unexamined Patent Application Publication No. 2006-284254 is a technology for predicting the course leaving the branch and predicting the virtual target area used to provide information before the vehicle arrives at the branch point. Further, according to the above-described course-prediction method, the leaving course provided at a branch where a course ahead the branch point can be adequately map-matched based on the satellite navigation and/or the autonomous navigation, as shown in Fig. 3 of Japanese Unexamined Patent Application Publication No. 2006-284254. Namely, according to the above-described course-prediction method, the leaving course is predicted at a branch where a road where the vehicle actually travels immediately after the branch, that is, a link can be determined based on the satellite navigation and/or the autonomous navigation without tracking a travel route ahead the branch. Therefore, map-matching using a result of the leaving-course prediction is not performed and the need for the map-matching is not mentioned. That is to say, the above-described actual problem of the map-matching function of the navigation apparatus, particularly, the problem occurring at the narrow-angle branch is not solved. Further, even though the result of prediction of the course ahead the branch point, the prediction being made based on the travel history of the driver at the branch, is simply applied to the map-matching, an obtained result is limited, so as to solve the above-described problem occurring at the branch point. Since the dependence on the result of prediction of the leaving course increases during the map-matching, the prediction result being obtained based on the travel frequency in the past, the vehicle-position data seems to be matched to data on a road where the vehicle had traveled with high frequency irrespective of the road where the vehicle actually travels, which may cause erroneous matching.

Accordingly, it is an object of the present invention to provide an vehicle-position-recognition apparatus that can accurately determine and select a link where an vehicle travels from among plural links branched at a branch point, particularly, a narrow-angle-branch point.

A vehicle-position-recognition apparatus according to an embodiment of the present invention includes a vehicle-position-information-acquisition unit configured to acquire vehicle-position information indicating a current position of a vehicle, a road-information-acquisition unit configured to acquire road information indicating at least one road based on a connection relationship between plural links, a link-determination unit configured to determine a link where the vehicle travels based on the vehicle-position information and the road information, a history-information-generation unit configured to generate travel-history information indicating a route where the vehicle travels at a point where a link is branched based on the determined link, an image-information-acquisition unit configured to acquire image information about surroundings of the vehicle, an image-recognition unit configured to recognize at least one image of a recognition target on which data is included in the image information, a history-information-storage unit configured to store the generated travel-history information in association with recognition information indicating a result of recognition of the recognition target, the recognition being performed by the image-recognition unit, and a learning unit configured to generate learning-priority information indicating a priority of each link based on the travel-history information and the recognition information that are stored in the history-information-storage unit, the priority being used when the link-determination unit determines the link where the vehicle travels from among plural links branched out at the branch point.

Accordingly, it becomes possible to adequately collect information about a route where the vehicle had traveled as the travel-history information at the point where the link is branched, and store the travel-history information in association with the recognition information indicating the result of the recognition of the recognition target, the recognition being performed by the image-recognition unit. Further, the learning-priority information indicating the priority of each link is generated based on the travel-history information and the recognition information that are stored in the above-described manner, the priority being used when the link where the vehicle travels is determined. Therefore, when the link-determination unit determines the link where the vehicle travels from among the plural links branched at the branch point, it becomes possible to make a determination incorporating the result of learning the route where the vehicle had traveled by using the learning-priority information. Therefore, if it is difficult to determine the link of the road where the vehicle currently travels based only on the vehicle-position information and/or the road information that are obtained by a GPS position-measurement and/or the autonomous navigation, as is the case with the narrow-angle branch or the like, the link where the vehicle travels can be accurately determined and selected from among the plural links branched at the branch point. Further, since the learning-priority information is generated by using not only the travel-history information but also the recognition information, the link where the vehicle travels can be determined by using the result of recognition of the image of the recognition target and the travel history in combination. Therefore, the dependence on travel frequency in the past is not exclusively increased. Consequently, the vehicle-position data is not unconditionally matched to data on the road having a high travel frequency and the link where the vehicle actually travels can be accurately determined considering the result of image processing performed for the recognition target.

In the above-described vehicle-position-recognition apparatus, the history-information-generation unit stores information about a route of the link determined by the link-determination unit from the branch point over at least one predetermined storage section and generates the travel-history information based on the stored link-route information.

Accordingly, when the link-route information is stored by as much as an unnecessarily long region, the amount of the travel-history information increases so that the history-information-storage unit requires a large capacity. Since the link range on which data is stored can be stipulated as in the above-described embodiment, data on the link determined by the link-determination unit can be stored with efficiency so that no space is wasted.

Further, in the above-described vehicle-position-recognition apparatus, the learning unit extracts the travel-history information from the history-information-storage unit based on the recognition result, the travel-history information being associated with the recognition information agreeing with the recognition result, and generates the learning-priority information based on the extracted travel-history information.

Information about images of surroundings of the vehicle, the image information being acquired by the image-information-acquisition unit, is about picked up images of surroundings of the road where the vehicle actually travels. Therefore, the result of the recognition of the recognition target, the recognition being performed by the image-recognition unit, matches the status of the road where the vehicle actually travels. According to the above-described embodiment, the travel-history information associated with the recognition information matching the recognition result is extracted from the history-information-storage unit. Then, the learning-priority information is generated based on the extracted travel-history information. As for a road which is frequently used, the ratio at which the vehicle travels to each of roads branched out at a branch point is tilted. Data on the above-described tilt is extracted based on the result of the recognition of the recognition target matching the status of each road. The generated learning-priority information incorporating the extracted tilt data matches the result of recognition of a recognition target provided on each road, the recognition that had been performed when the vehicle had traveled. Consequently, the link where the vehicle travels can be accurately determined and selected from among the plural links branched at the branch point without depending only on the travel frequency obtained in the past.

In the above-described vehicle-position-recognition apparatus, the learning-priority information shows a priority determined based on whether or not the image of the recognition target is recognized at the branch point indicated by the recognition information, and a travel ratio at which the vehicle travels to each of plural links branched out at the branch point, the travel ratio being determined based on the travel-history information.

Accordingly, the learning-priority information indicating the priority is generated based on whether or not the image of the recognition target is recognized at the branch point and the travel ratio obtained in the past at the branch point. As for the road which is frequently used, the ratio at which the vehicle travels to each of the roads branched out at the branch point is tilted. When the learning-priority information is generated based on the travel ratio obtained in the past, the link where the vehicle travels can be accurately determined and selected from among the plural links branched at the branch point by using data on the above-described tilt. According to the above-described embodiment, information about whether or not the image of the recognition target is recognized at the branch point is added to the learning-priority information. The information about the images of the surroundings of the vehicle, the image information being acquired by the image-information-acquisition unit, is about the picked up images of the surroundings of the road where the vehicle actually travels. Consequently, the information about whether or not the image of the recognition target is recognized by the image-recognition unit is information adequately indicating the status of the road where the vehicle actually travels, and the learning-priority information is information matching the result of the recognition of the recognition target provided on each road, the recognition that had been performed when the vehicle had traveled. As a result, the link where the vehicle travels can be accurately determined and selected from among the plural links branched at the branch point without depending only on the travel frequency obtained in the past.

Further, in the above-described vehicle-position-recognition apparatus, the learning-priority information shows a priority determined based on a position where the recognition of the recognition target is performed, the recognition being performed at the branch point indicated by the recognition information, and a travel ratio at which the vehicle travels to each of plural links branched out at the branch point, the travel ratio being determined based on the travel-history information.

Accordingly, the learning-priority information showing the priorities is generated based on the position of the recognition of the recognition target, the recognition being performed at the branch point, and the travel ratio obtained in the past at the branch point. As for the road which is frequently used, the ratio at which the vehicle travels to each of the roads branched out at the branch point is tilted. When the learning-priority information is generated based on the travel ratio obtained in the past, the link where the vehicle travels can be accurately determined and selected from among the plural links branched at the branch point by using data on the above-described tilt. According to the above-described embodiment, information about the position of the recognition of the recognition target at the branch point is added to the learning-priority information. The information about the images of the surroundings of the vehicle, the image information being acquired by the image-information-acquisition unit, is about the picked up images of the surroundings of the road where the vehicle actually travels. Consequently, the information about the position of the recognition of the recognition target, the recognition being performed by the image-recognition unit, is information adequately indicating the road where the vehicle actually travels, and the learning-priority information is information matching the result of the recognition of the recognition target provided on each road, the recognition that had been performed when the vehicle had traveled. As a result, the link where the vehicle travels can be accurately determined and selected from among the plural links branched at the branch point without depending only on the travel frequency obtained in the past.

Further, in the above-described vehicle-position-recognition apparatus, the link-determination unit determines the link where the vehicle travels by using the learning-priority information.

Accordingly, the link-determination unit can make a determination incorporating the result of learning the route where the vehicle had traveled by using the learning-priority information. Therefore, even if it is difficult to determine the link of the road where the vehicle currently travels based only on the vehicle-position information and/or the road information that are obtained by the GPS position-measurement and/or the autonomous navigation, as is the case with the narrow-angle branch or the like, the link where the vehicle travels can be determined and selected from among the plural links branched at the branch point with increased precision.

The above-described vehicle-position-recognition apparatus further includes a general-priority-information-acquisition unit configured to acquire general-priority information that is set based on an attribute of a road and that indicates a priority of each link, where the priority is used when determining the link where the vehicle travels from among the plural links branched out, wherein the link-determination unit determines the link where the vehicle travels by using the learning-priority information in addition to the general-priority information, or the learning-priority information in place of the general-priority information.

At a branch point of a road other than the road which is frequently used, the link is determined by using the general-priority information so that the link determination is made under ordinary conditions determined based on the road attribute. On the other hand, at a branch point of the road which is frequently used, the link is determined by using the learning-priority information generated based on the travel history of the vehicle. When using the learning-priority information in place of the general-priority information, the link can be determined in a manner adequate for the vehicle based on the travel history of the vehicle precluding the effects of the ordinary conditions. On the other hand, the use of the learning-priority information in addition to the general-priority information allows for making diversified link determination incorporating both the above-described priority-information items.

In the above-described vehicle-position-recognition apparatus, the vehicle-position-information-acquisition unit corrects the vehicle-position information based on a result of the determination of the link where the vehicle travels, the determination being made by the link-determination unit.

There have been various methods and apparatuses and/or devices to obtain the vehicle-position data. According to the autonomous navigation, however, the current vehicle position is stipulated based on a distance and/or a direction in which the vehicle travels with reference to the closest vehicle position. If data on the vehicle position shows a displacement, the displacement gradually increases. According to the above-described embodiment, however, the vehicle-position data is corrected based on the result of the link determination made by the link-determination unit, which increases the precision of the vehicle-position data. Since the link-determination unit determines the link where the vehicle travels by using the vehicle-position data, the precision of the link determination also increases.

In the above-described vehicle-position-recognition apparatus, the point where the link is branched is a narrow-angle branch.

The vehicle-position data is acquired according to a method including the so-called satellite navigation and/or the so-called autonomous navigation. At the narrow-angle branch where a road is branched at a relatively small angle, the vehicle-position data often has a value that can be used for plural links because of an error occurring due to the satellite navigation and/or the autonomous navigation. However, according to the above-described embodiment, the link-determination unit determines the link where the vehicle travels by using the learning-priority information generated based on the travel history. Therefore, even if it is difficult to determine the link of the road where the vehicle currently travels based only on the vehicle-position data and/or the road information that are obtained through the GPS position-measurement and/or the autonomous navigation, particularly when the narrow-angle branch or the like exists, it becomes possible to increase precision with which the link where the vehicle travels is determined and selected from among the plural links branched at the branch point. Here, the narrow-angle branch is a road branched at an angle so small that it is almost difficult to detect a course change through an azimuth sensor. For example, the narrow-angle branch is a road branched at an angle of 45° or less.

In the above-described vehicle-position-recognition apparatus, the history-information-generation unit determines a route where the vehicle actually travels at the point where the link is branched based on the link determined by the link-determination unit, and generates the travel-history information indicating the route where the vehicle actually travels.

The history-information-generation unit generates the travel-history information indicating the route where the vehicle travels at the point where the link is branched based on the link determined by the link-determination unit. At that time, if the vehicle moves between links showing no continuity according to the road information, it means that the so-called "position skip" occurs. In that case, a link determined immediately after the vehicle passes the branch point is erroneously determined. Therefore, a route where the vehicle actually travels can be determined by correcting the above-described link. According to the above-described embodiment, the route where the vehicle actually travels is determined at the point where the link is branched and the travel-history information indicating the route where the vehicle actually travels is generated. Since the history-information-storage unit stores the travel-history information corresponding to the actual travel route, the learning unit can generate the learning-priority information at light calculation load.

In the above-described vehicle-position-recognition apparatus, the history-information-generation unit generates the travel-history information indicating the route based on an order of at least two links determined by the link-determination unit.

The history-information-generation unit generates the travel-history information indicating the route where the vehicle travels at the point where the link is branched based on the link determined by the link-determination unit. At that time, if the vehicle moves between links showing no continuity according to the road information, it means that the so-called "position skip" occurs. According to the above-described embodiment, irrespective of whether or not the above-described "position skip" occurs, for example, the travel-history information indicating the route based on the order in which the at least two links are determined by the link-determination unit is generated. However, if the travel-history information shows the movement of the vehicle between the links showing no continuity according to the road information, the route where the vehicle actually travels can be determined based on the travel-history information. The above-described determination includes the determination of whether or not the "position skip" occurs. Consequently, the learning unit can generate the learning-priority information about the route where the vehicle actually travels.

Further, in the above-described vehicle-position-recognition apparatus, the storage section is a section extending from a first link indicated by the travel-history information to a second link reached with a position skip so that the road information shows no connection relationship between the first and second links.

When the storage section is provided over an unnecessarily long section, the amount of the travel-history information increases so that the history-information-storage unit requires a large capacity. If the position skip occurs, the actual travel route can be determined at the branch point. Consequently, the storage section is determined to be the section extending from the first link to the second link reached with the position skip so that a sufficient section can be assured and the travel-history information with an adequate data amount can be obtained.

Further, in the above-described vehicle-position-recognition apparatus, the storage section extends from the branch point to the next branch point in a direction in which the vehicle travels.

When the storage section is provided over an unnecessarily long section, the amount of the travel-history information increases so that the history-information-storage unit requires a large capacity. The travel-history information is generated based on the premise that the branch point is determined to be a start point. Therefore, if the travel-history information is generated over the branch point, data on sections overlapping each other is stored. According to the above-described embodiment, the storage section is determined to be the section extending from the branch point to the next branch point so that a sufficient section can be assured and the travel-history information with an adequate data amount can be obtained.

A navigation apparatus according to another embodiment of the present invention includes the above-described vehicle-position-recognition apparatus, a road-information-storage unit storing the road information, plural application programs configured to operate by referring to a vehicle-position information recognized by the vehicle-position-recognition apparatus and the road information, and a guide-information-output unit configured to output guide information by operating based on the application programs.

According to the above-described embodiment, the application programs can operate based on the link determined by using the learning-priority information. Therefore, accurate guide information can be presented based on the link where the vehicle travels, the link being determined with precision at the branch point, particularly, the narrow-angle-branch point. For example, a navigation apparatus with increased visibility can be presented by decreasing the position skip occurring at a branch point, particularly, a narrow-angle-branch point.

A vehicle-position-recognition program according to another embodiment of the present invention is a program configured to make a computer execute the steps of acquiring vehicle-position information indicating the current position of an vehicle, acquiring road information indicating at least one road based on a connection relationship between plural links, determining a link where the vehicle travels based on the vehicle-position information and the road information, generating travel-history information indicating a route where the vehicle travels at a point where a link is branched based on the determined link, acquiring image information about surroundings of the vehicle, recognizing at least one image of a recognition target on which data is included in the image information, storing the generated travel-history information in a history-information-storage unit in association with recognition information indicating a result of recognition of the recognition target, the recognition being performed at the image-recognition step, and generating learning-priority information indicating a priority of each link based on the travel-history information and the recognition information that are stored in the history-information-storage unit, the priority being used when the link where the vehicle travels is determined from among plural links branched out at the branch point at the link-determination step.

According to the above-described embodiment, the program executed by the computer allows for adequately collecting information about a route where the vehicle had traveled at the point where the link is branched as the travel-history information, and storing the travel-history information in association with the recognition information indicating the result of the recognition of the recognition target, the recognition being performed by the image-recognition unit. Further, the learning-priority information indicating the priority of each link is generated based on the travel-history information and the recognition information that are stored in the above-described manner, the priority being used when the link where the vehicle travels is determined. Therefore, when the link where the vehicle travels is determined and selected, at the link-determination step, from among the plural links branched at the branch point, it becomes possible to make a determination incorporating the result of learning the route where the vehicle had traveled by using the learning-priority information. Therefore, if it is difficult to determine the link of the road where the vehicle currently travels based only on the vehicle-position information and/or the road information obtained by the GPS position-measurement and/or the autonomous navigation, as is the case with the narrow-angle branch or the like, the link where the vehicle travels can be accurately determined and selected from among the plural links branched at the branch point. Further, since the learning-priority information is generated by using not only the travel-history information but also the recognition information, the dependence on the travel frequency obtained in the past is not exclusively increased even though the link is determined by using the learning-priority information. Therefore, the vehicle-position data is not unconditionally matched to data on the road having a high travel frequency and the link determination can be appropriately performed according to the road where the vehicle actually travels.

BRIEF DESCRIPTION OF THE DRAWINGS

Fig. 1 is a block diagram showing the schematic configuration of a navigation apparatus according to an embodiment of the present invention; and

Fig. 2 is an illustration showing an example configuration of map information stored in a map database.

Fig. 3 shows an example where an image-pickup device is provided on a vehicle.

Fig. 4 illustrates a road having a narrow-angle branch and information about the road.

Fig. 5 illustrates a travel history of the road shown in Fig. 4.

Fig. 6 is a flowchart illustrating vehicle-position-recognition procedures according to an embodiment of the present invention.

Fig. 7 illustrates a link determination made at another narrow-angle branch.

Fig. 8 illustrates another example road having a recognition target other than that shown in Fig. 5.

Fig. 9 illustrates another example road having a recognition target other than those shown in Figs. 5 and 8.

DESCRIPTION OF THE PREFERRED EMBODIMENTS

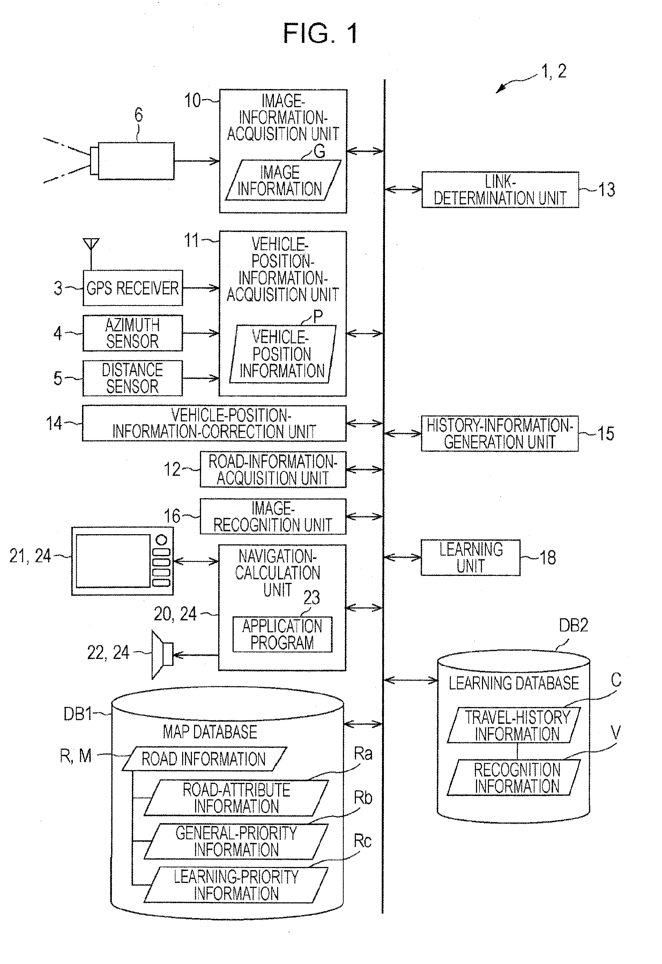

Hereinafter, preferred embodiments according to the present invention will be described with reference to the attached drawings. Fig. 1 is a block diagram showing the schematic configuration of a navigation apparatus 1 according to a first embodiment of the present invention. The navigation apparatus 1 includes an vehicle-position-recognition device 2 according to an embodiment of the present invention. The above-described vehicle-position-recognition device 2 allows for determining and selecting a road where a vehicle travels from among plural roads which are branched at a road-branch point, particularly, a narrow-angle-branch point, and correcting vehicle-position information P. Then, the navigation apparatus 1 performs navigation processing including route guidance or the like based on the corrected vehicle-position information P.

The navigation apparatus 1 shown in Fig. 1 is provided with function units including an image-information-acquisition unit 10, a vehicle-position-information-acquisition unit 11, a road-information-acquisition unit 12, a link-determination unit 13, a vehicle-position-information-correction unit 14, a history-information-generation unit 15, an image-recognition unit 16, a learning unit 18, a navigation-calculation unit 20, etc. Each of the above-described function units is housed in the navigation apparatus 1 as at least one of hardware and software (program), where a calculation unit including a central-processing unit (CPU), a digital-signal processor (DSP), etc. is housed in the navigation apparatus 1 as the core of the function units. Each of the above-described function units performs various processing procedures for transmitted data. Further, each of the above-described function units is configured so that information can be transmitted and/or received between the above-described function units. The navigation apparatus 1 includes databases DB1 and DB2 storing, for example, map information. Each of the databases DB1 and DB2 includes a device including a recording medium that can store information and a unit to drive the recording medium, as hardware. The above-described device may include, for example, a hard-disk drive, a digital versatile disk (DVD) drive including a DVD read-only memory (ROM), a compact-disk (CD) drive including a CD-ROM, etc. The storage medium may be a rewritable medium and/or a write-once medium, as required. Hereinafter, the configuration of each of the above-described units of the navigation apparatus 1 of the embodiment will be described in detail.

[Map database]

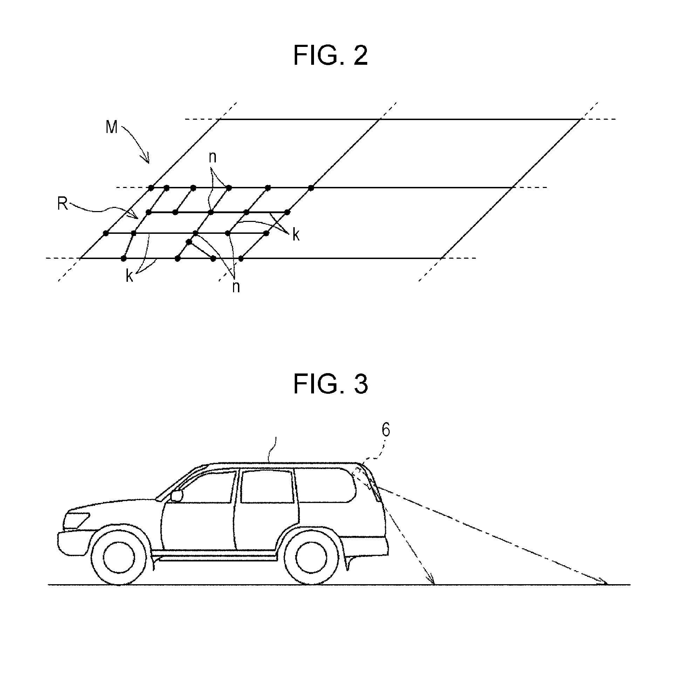

A map database DB1 is a database storing map information M showing an area divided in predetermined sections. Fig. 2 is an illustration showing an example configuration of the map information M stored in the map database DB1. As shown in Fig. 2, the map information M includes road information R showing a road network based on connection relationships between many nodes n corresponding to intersections and links k corresponding to roads uniting the intersection points with one another. Each of the nodes n includes information about a position (coordinates) shown on the map, the position being expressed as a latitude and a longitude. The links k are connected to one another via the nodes n. Further, each of the links k includes information about a shape-interpolation point or the like used to express the road type, the link length, the road width, the link shape, as its attribution information. Here, the road-type information is road-type information showing many types of roads including, for example, a freeway, an urban road, a narrow street, a mountainous road, etc. The above-described attribute information of the links k corresponds to road-attribute information Ra (refer to Fig. 1). The map database DB1 corresponds to a road-information-storage unit according to an embodiment of the present invention. In Fig. 2, only the road information R corresponding to a single section is shown, and other road information R corresponding to other sections is omitted.

Referring to Fig. 1, the road information R includes general-priority information Rb and learning-priority information Rc in addition to the road-attribute information Ra. Each of the general-priority information Rb and the learning-priority information Rc is provided as information showing the priority of each of links k, so as to determine and select a link k where the vehicle travels from among links k extending from the narrow-angle-branch point. The general-priority information Rb on which details will be described later is information about a priority determined based on the road-attribute information Ra or the like. The learning-priority information Rc on which details will be described later is information about a priority determined based on a result of learning performed based on the history of travel of the vehicle.

[Image-information-acquisition unit]

The image-information-acquisition unit 10 functions, so as to acquire image information G showing images picked up by an image-pickup device 6, where the image information G shows images of surroundings of the vehicle. Here, the image-pickup device 6 includes an on-vehicle camera or the like including an image-pickup unit. Further, the image-pickup device 6 is provided, at least, at a position appropriate to pick up an image of the surface of a road around the vehicle. Preferably, the above-described image-pickup device 6 includes a back camera shown in Fig. 3, for example, the back camera being configured to pick up an image of the surface of a road behind the vehicle. The image-information-acquisition unit 10 captures information about the image picked up by the image-pickup device 6 at predetermined time intervals via a frame memory (not shown) or the like. The time intervals at which the image information G is acquired may be, for example, around 10 to 50 ms. Consequently, the image-information-acquisition unit 10 can consecutively acquire the image information G corresponding to at least two frames picked up by the image-pickup device 6. The image information G acquired in the above-described manner is transmitted to the image-recognition unit 16.

[Vehicle-position-information-acquisition unit]

The vehicle-position-information-acquisition unit 11 acquires the vehicle-position information P showing the current position of the vehicle. Here, the vehicle-position-information-acquisition unit 11 is connected to a global positioning system (GPS) receiver 3, an azimuth sensor 4, and a distance sensor 5. Here, the GPS receiver 3 is a device configured to receive a GPS signal transmitted from a GPS satellite. The above-described GPS signal is usually received at intervals of a single second and transmitted to the vehicle-position-information-acquisition unit 11. In the vehicle-position-information-acquisition unit 11, the GPS signal transmitted from the GPS satellite to the GPS receiver 3 is analyzed so that the current position (the latitude and the longitude), the travel direction, the moving speed, the hour, etc. of the vehicle can be acquired. The azimuth sensor 4 is configured to detect the travel direction of the vehicle and/or a change in the travel direction. The azimuth sensor 4 includes, for example, a gyro sensor, a terrestrial-magnetism sensor, an optical rotation sensor and/or a rotation-type resistance volume affixed to a rotation unit of a handle, an angle sensor affixed to a wheel unit, etc. Then, the azimuth sensor 4 transmits information about the detection result to the vehicle-position-information-acquisition unit 11. The distance sensor 5 is configured to detect the speed and/or the moving distance of the vehicle. The above-described distance sensor 5 includes, for example, a vehicle-speed pulse sensor configured to output a pulse signal each time a drive shaft, a wheel, etc. of the vehicle rotates by as much as a predetermined amount, a yaw-rate sensor or a G (Gravity) sensor configured to detect the acceleration of the vehicle, a circuit configured to integrate the detected acceleration, etc. Then, the distance sensor 5 transmits information about the vehicle speed and the moving distance to the vehicle-position-information-acquisition unit 11, as the detection result. The vehicle-position-information-acquisition unit 11 performs a calculation to determine the vehicle position according to at least one known method based on information transmitted from the GPS receiver 3, the azimuth sensor 4, and the distance sensor 5, and acquires the vehicle-position information P.

[Road-information-acquisition unit]

The road-information-acquisition unit 12 is configured to acquire the road information R showing information about a road based on the connection relationships between the links k. The road-information-acquisition unit 12 acquires the road information R showing the surroundings of the vehicle position, the road information R being extracted from the map database DB1. The acquired road information R includes the road-attribute information Ra, the general-priority information Rb, and the learning-priority information Rc. The road-information-acquisition unit 12 also functions as a road-attribute-information-acquisition unit, a general-priority-information-acquisition unit, and a learning-priority-information-acquisition unit.

[Link-determination unit]

The link-determination unit 13 determines the link k where the vehicle travels based on the vehicle-position information P and the road information R. The link-determination unit 13 determines the link k where the vehicle travels by performing the same processing as that performed to achieve known map matching. The link-determination unit 13 is provided to perform link determination. Further, as will be described later, the link-determination unit 13 determines the link k where the vehicle travels by using the learning-priority information Rc and/or the general-priority information Rb at a point where the link k is branched.

[Vehicle-position-information-correction unit]

The vehicle-position-information-correction unit 14 corrects the vehicle-position information P according to a road indicated by the road information R, that is, the link k by performing the known map matching based on the result of determination made by the link-determination unit 13. As a result of the correction, the vehicle-position information P acquired by the vehicle-position-information-acquisition unit 11 includes information about the current position of the vehicle, the current position being expressed as the latitude and the longitude, and information about the direction in which the vehicle travels.

[Navigation-calculation unit]

The navigation-calculation unit 20 is a calculation unit operating according to an application program 23, so as to execute navigation functions including displaying the vehicle position, searching a route from a departure point to a destination point, performing course guidance until the vehicle arrives at the destination point, making a search for the destination, etc. For example, the navigation-calculation unit 20 acquires the map information M showing the area surrounding the vehicle from the map database DB1 based on the vehicle-position information P, displays an image of the map on a display-input unit 21, and superimposes and displays a vehicle-position mark on the map image based on the vehicle-position information P. Further, the navigation-calculation unit 20 makes a search for a route extending from a predetermined departure point to a destination point based on the map information M stored in the map database DB1. Further, the navigation-calculation unit 20 performs the course guidance for a driver by using at least one of the display-input device 21 and a voice-output device 22 based on the searched route extending from the departure point to the destination point and the vehicle-position information P. Further, according to the above-described embodiment, the navigation-calculation unit 20 is connected to the display-input device 21 and the voice-output device 22. The display-input device 21 includes a display device such as a liquid-crystal-display device and an input device such as a touch panel that are integrated with each other. The voice-output device 22 includes a speaker or the like. According to the above-described embodiment, the navigation-calculation unit 20, the display-input device 21, and the voice-output device 22 function as a guidance-information-output unit 24 according to an embodiment of the present invention.

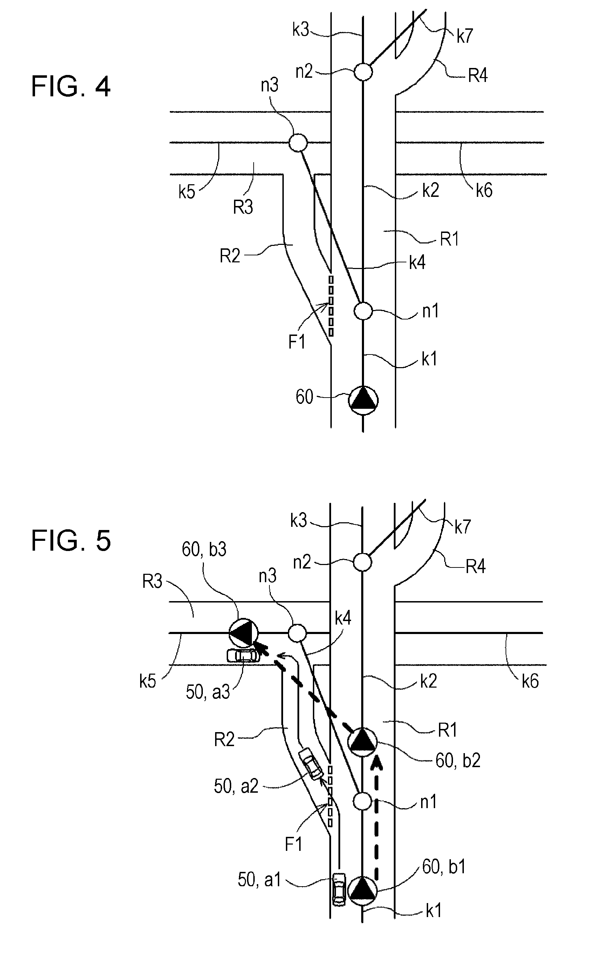

Fig. 4 illustrates a road including the narrow-angle-branch point and information about the road. In Fig. 4, each of the signs n1, n2, and n3 indicates the node n and each of the signs k1, k2, k3, k4, k5, k6, and k7 indicates the link k. The signs R1, R2, R3, and R4 indicate the road corresponding to the links k1 to k7. The road R1, which is a trunk line, has a narrow-angle branch on the node n1. The road R2 branched off the road R1 extends along the road R1 as a service road and is connected to the road R3, which is a trunk line orthogonal to the road R1 on the node n3. Reference numeral 60 designates a vehicle-position mark shown on the display-input device 21. The vehicle-position mark 60 indicates that the vehicle travels toward the node n1, which is a narrow-angle-branch point. Further, at the point where the road R2 is branched off the road R1, a road marking F1 shown as a broken line is provided, so as to indicate the above-described branch. The road marking F1 is a feature which is a recognition target according to an embodiment of the present invention. Further, at the narrow-angle-branch point, a road is caused to branch at an angle so small that the azimuth sensor detects a change in the course with difficulty. The above-described small angle is, for example, an angle of 45°.

[History-information-generation unit]

The history-information-generation unit 15 is configured to generate travel-history information C indicating a route where the vehicle travels at a point where the link k is branched out based on the link k determined by the link-determination unit 13. Fig. 5 illustrates the travel history of roads shown in Fig. 4. In Fig. 5, a vehicle 50 traveling the road R1 is headed for the road R3 through the road R2, which is a branch road. At a position a1 shown on the road R1, the vehicle 50 is mapped on the link k1 corresponding to the road R1 through adequate link determination, and the vehicle-position mark 60 is displayed at a position b1 shown on the link k1. The vehicle 50 existing at a position a2 shown on the road R2 extending along the road R1 is not mapped on the link k4 corresponding to the road R2, but on the link k2 corresponding to the road R1. The vehicle-position mark 60 is displayed at a position b2 shown on the link k2. The vehicle 50 existing at a position a3 shown on the road R3 is mapped on the link k5 corresponding to the road R3 based on a fair determination and the vehicle-position mark 60 is shown at a position b3 shown on the link k5.

Each of the above-described positions a1 to a3 of the vehicle 50 and the positions b1 to b3 of the vehicle-position mark 60 shown on the display-input device 21 is a representative point. In actuality, the link determination is made by performing more detailed steps so that the vehicle-position mark 60 is displayed. When a route including the links k determined by the link-determination unit 13 is expressed as a link sequence defined in the determination order, the line sequence is shown as "k1 → k2 → k5". Referring to Figs. 4 and 5, the road information R shows no connection relationship between the links k2 and k5. That is to say, the link k2 is directly connected to the link k5, which means that a "position skip" occurs. The position skip means that the vehicle marks 60 displayed on the display-input device 21 become discontiguous, so that the driver feels a sense of discomfort.

Therefore, the vehicle-position-recognition device 2 according to an embodiment of the present invention generates the travel-history information C based on the travel history of the vehicle and the learning-priority information Rc based on the travel-history information C so that an accurate link determination can be made. The history-information-generation unit 15 generates the travel-history information C based on the route of the links k determined by the link-determination unit 13.

For example, the travel-history information C may indicate the route of the links k shown in the order of link determinations made by the link-determination unit 13 irrespective of the route where the vehicle 50 actually travels. In Fig. 5, for example, the route shown as "C1:

k1 → k2 → k5", that is, a link sequence is generated as the travel-history information C (C1). According to examples shown in Figs. 4 and 5, link sequences indicating the following routes often become the travel-history information C (C2 to C4).
C2: k1 → k4 → k5
C3: k1 → k2 → k3
C4: k1 → k4 → k3

The link sequence shown as the travel-history information C2 indicates the route from the road R1 to the road R3 via the road R2 based on a fair link determination. The link sequence shown as the travel-history information C3 indicates the route where the vehicle travels the road R1 straight ahead without changing the course at a branch point based on a fair link determination. The link sequence shown as the travel-history information C4 is obtained when the position skip occurs in the different direction from that in which the position skip of the link sequence shown as the travel-history information C1 occurs.

The history-information-generation unit 15 stores data on the route including the links k determined by the link-determination unit 13 from the branch point by as much as at least one predetermined storage section, and generates the travel-history information C based on the stored data on the route including the links k. Here, the at least one predetermined storage section corresponds to, for example, a section extending from the link k shown in the travel-history information C to another link, where the road information R shows no connection relationship between the link k and the another link. That is to say, the predetermined storage section is started from the link k and ended at a point reached with the "position skip". According to the above-described embodiment, the predetermined storage section corresponds to the travel-history information C1 and the travel-history information C4. According to the travel-history information C1, the storage section corresponds to a travel route extending from the link k1 that is determined to be a start point and that is provided before the road is branched to the link k5 reached with the position skip. According to the travel-history information C4, the storage section corresponds to a travel route extending from the link k1 that is determined to be the start point and that is provided before the road is branched to the link k3 reached with the position skip.

In addition, the predetermined storage section may extend from a predetermined point to the next narrow-angle-branch point in a direction in which the vehicle travels, or have predetermined number of links. This is because the travel-history information C should be generated for the narrow-angle-branch point once the next narrow-angle-branch point is attained. Further, a predetermined number of links may be provided for every branch point, so as to determine the link k where the storage section is ended when no position skip occurs. Preferably, the predetermined number is equivalent to or larger than the number of links k, where the "position skip" possibly occurs on the last of the above-described links k. According to the above-described embodiment, for example, if the storage section has three links and starts from the link k1 that is determined to be the start point and that is provided before the point where the road is branched, a travel route extending from the link k1 to the link k5 and/or a travel route extending from the link k1 to the link k3 corresponds to the storage section. Of course, the storage section may have four or more links, so as to increase precision.

In the above-described embodiment, the travel-history information C is generated in the order of link determination made by the link-determination unit 13 irrespective of the route where the vehicle 50 actually travels. However, the history-information-generation unit 15 may determine a route where the vehicle 50 actually travels at the branch point defined on the link k based on the link k determined by the link-determination unit 13 and generate the travel-history information C indicating the route where the vehicle 50 actually travels.

For example, if the order in which the links k are determined by the link-determination unit 13 is shown as "k1 → k2 → k5", the vehicle 50 moves from the link k2 to the link k5, where the road information R shows no connection relationship between the link k2 and the link k5. Since the above-described state indicates the position skip, the route where the vehicle 50 actually travels is determined to be "k1 → k4 → k5" and information about the above-described route is generated as the travel-history information C.

[Image-recognition unit]

The image-recognition unit 16 is configured to recognize an image of a recognition target, the image being included in the image information G. Here, the recognition target is a feature included in image information and includes at least one of an edge, a predetermined color, and a predetermined shape. Then, the result of recognition of the recognition target is a characteristic amount obtained through predetermined image-recognition processing performed for the recognition target. Preferably, the recognition target is a feature existing on the road surface, that is, a road marking provided on the road surface. Information about the road marking can be extracted as an edge component by subjecting the image information G to known Gaussian filtering or the like. If the edge component is determined to be the recognition target, the varying number of the extracted edge components becomes a characteristic amount, as the recognition result. Further, the color component of the road marking painted white, yellow, or orange can be extracted by subjecting the image information G to known window-comparator processing. If each of the above-described colors is determined to be the recognition target, the color type and the varying number of extracted color components corresponding thereto become the characteristic amount obtained as the recognition result. Further, a predetermined shape including a triangle, a circle, a square, a figure, etc. may be determined to be the recognition target and subjected to pattern-matching processing. Then, the matching degree obtained as a result of the pattern matching may be determined to be the characteristic amount.

According to Figs. 4 and 5, a road marking F1 is recognized, as the recognition target. The simplest example of the recognition result is information about whether or not an image of the road marking F1 is recognized. For example, when the vehicle 50 traveling along the road R1 changes its course from the road R1 to the road R2, the vehicle 50 travels over the road marking F1. As a result, the image-recognition unit 16 recognizes the image of the road marking F1 which is the recognition target. On the other hand, if the vehicle 50 keeps traveling along the road R1, the vehicle 50 does not travel over the road marking F1 and the road marking F1 is not recognized, as the recognition target. The result of recognition of the road marking F1 which is the recognition target becomes recognition information V. According to the above-described embodiment, the following two types of recognition information V1 and recognition information V2 are obtained according to whether or not the image of the road marking F1 is recognized.

V1: Road marking F1 is recognized
V2: Road marking F1 is not recognized

[Learning database]

A learning database DB2 functions as a history-information-storage unit configured to store the travel-history information C generated by the history-information-generation unit 15 in association with recognition information indicating the result of recognition of the recognition target, the recognition being performed by the image-recognition unit. The learning database DB2 compiles information about a travel ratio of a travel route in association with recognition information V into a database for each of branch points, where the travel route extends from the branch point, so that the travel-ratio information and the recognition information V are stored. For example, the travel-history information items C1, C2, C3, and C4 have information about the following travel ratios according to the recognition results indicated by the recognition information V.

V1: Road marking F1 is recognized;

C1: k1 → k2 → k5 : 78%
C2: k1 → k4 → k5 : 22%
C3: k1 → k2 → k3 : 0%
C4: k1 → k4 → k3 : 0%

V2: Road marking F1 is not recognized;

C1: k1 → k2 → k5 : 7%
C2: k1 → k4 → k5 : 2%
C3: k1 → k2 → k3 : 90%
C4: k1 → k4 → k3 : 1%

Here, when the travel-history information C (C12 and C13) is generated based on the travel route where the vehicle actually travels, the travel-history information C has the following travel ratios based on the recognition result indicated by the recognition information V.

V1: Road marking F1 is recognized;

C12: k1 → k4 → k5 : 100%
C13: k1 → k2 → k3 : 0%

V2: Road marking F1 is not recognized;

C12: k1 → k4 → k5 : 9%
C13: k1 → k2 → k3 : 91%

The image information G, which is acquired by the image-information-acquisition unit 10, showing images of surroundings of the vehicle 50 includes a picked-up image of the road R2 where the vehicle 50 actually travels. Therefore, the result of recognition of the recognition target, the recognition being performed by the image-recognition unit 16, that is, the result of recognition of the road marking F1 matches the road R2 where the vehicle 50 travels. Therefore, when the road marking F1 is recognized, the vehicle 50 travels along the road R2 corresponding to the link k4 at a travel ratio of 100%. On the other hand, when the road marking F1 is not recognized, the vehicle 50 travels along the road R1 corresponding to the link k2 at a travel ratio of the order of 100%. However, since the quality of the image information G is affected by imaging conditions including the weather, the hour, etc., the image of the road marking F1 may not be recognized even though the vehicle 50 travels along the road R2. According to the above-described embodiment, the vehicle 50 travels along the road R2 corresponding to the link k4 at a travel ratio of 9% even though the image of the road marking F1 is not recognized.

[Learning unit]

The learning unit 18 generates the learning-priority information Rc indicating the priority of each of the links k based on the travel-history information C stored in the history-information-storage unit 15, the priorities being used when the link k where the vehicle 50 travels is determined and selected from among the links k branched out at a branch point. The learning unit 18 corresponds to a learning unit according to an embodiment of the present invention. According to the travel-history information items C1 to C4 and the recognition information items V1 and V2 that are stored in the learning database DB2, the travel ratio at which the vehicle 50 travels to the links k, that is, the link k2 and the link k4 that branch out at the branch point become as below based on the recognition result indicated by the recognition result V.

V1: Road marking F1 is recognized;

k1 → k2 : 0%
k1 → k4 : 100%

V2: Road marking F1 is not recognized;

k1 → k2 : 91%
k1 → k4 : 9%

Therefore, the learning unit 18 generates the learning-priority information Rc indicating priorities given to the link k2 and the link k4 based on the travel ratio and the image-recognition information. The learning unit 18 extracts the travel-history information C from the learning database DB2 based on the result of recognition of the recognition target, the recognition performed by the image-recognition unit 16. At that time, the travel-history information C is associated with the recognition information V matching the above-described recognition result. Then, the learning unit 18 generates the learning-priority information Rc based on the extracted travel-history information C. According to the above-described embodiment, the learning-priority information Rc is generated as the following coefficients.

V1: Road marking F1 is recognized;

k1 → k2 : 0.0
k1 → k4 : 10.0

V2: Road marking F1 is not recognized;

k1 → k2 : 9.1
k1 → k4 : 0.9

Thus, the learning unit 18 generates the learning-priority information Rc based on the travel ratio of the vehicle and whether or not the recognition target exists at the branch point. The learning-priority information Rc indicates a priority determined based on the travel ratio of the vehicle, the travel ratio being determined based on the travel-history information C associated with the recognition information V matching the result of recognition of the recognition target, the recognition being performed by the image-recognition unit 16. Further, the above-described travel ratio is a ratio at which the vehicle travels to each of the links k branched at the branch point when the above-described recognition result is obtained. The learning-priority information Rc generated by the learning unit 18 in the above-described manner is used by the link-determination unit 13 determining the link k where the vehicle travels. Further, the result of the determination of the link k where the vehicle travels, the determination being made by the link-determination unit 13, is used by the vehicle-position-information-correction unit 14, so as to correct the vehicle-position information P.

[Vehicle-position-recognition procedures]

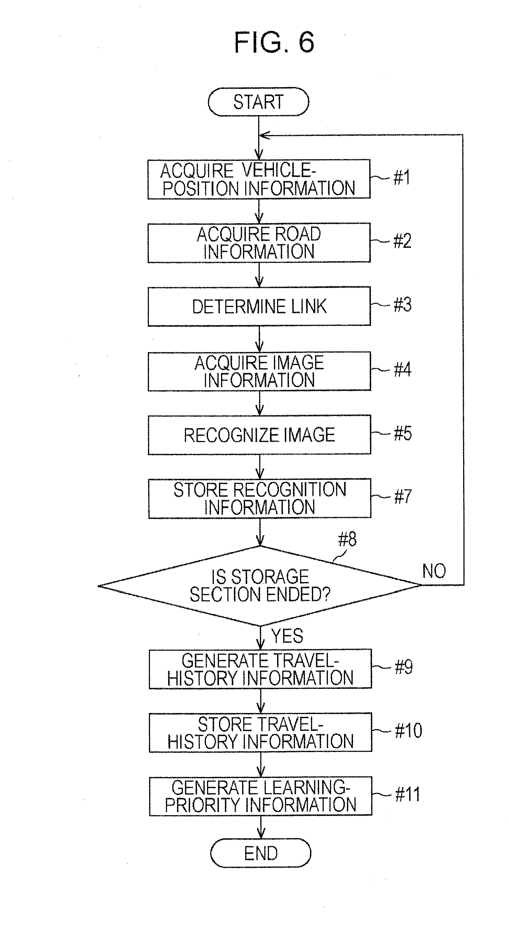

Hereinafter, the procedures of the vehicle-position recognition performed by the above-described vehicle-position-recognition device 2 will be described with reference to a flowchart of Fig. 6. The following description will be provided based on the premise that the vehicle-position-recognition device 2 recognizes, in advance, that the vehicle passes through the link k1 shown in each of Figs. 4 and 5. The procedures of the vehicle-position recognition described below are executed by the function units of the navigation apparatus 1. Each of the function units is housed in the navigation apparatus 1 as at least one of hardware and software (program), where the calculation unit including the CPU, the DSP, etc. is housed in the navigation apparatus 1 as the core of the function units. If the function units are provided as a program (a vehicle-position-recognition program), the CPU and/or the DSP functions as a computer executing the vehicle-position-recognition procedures provided as the function units.

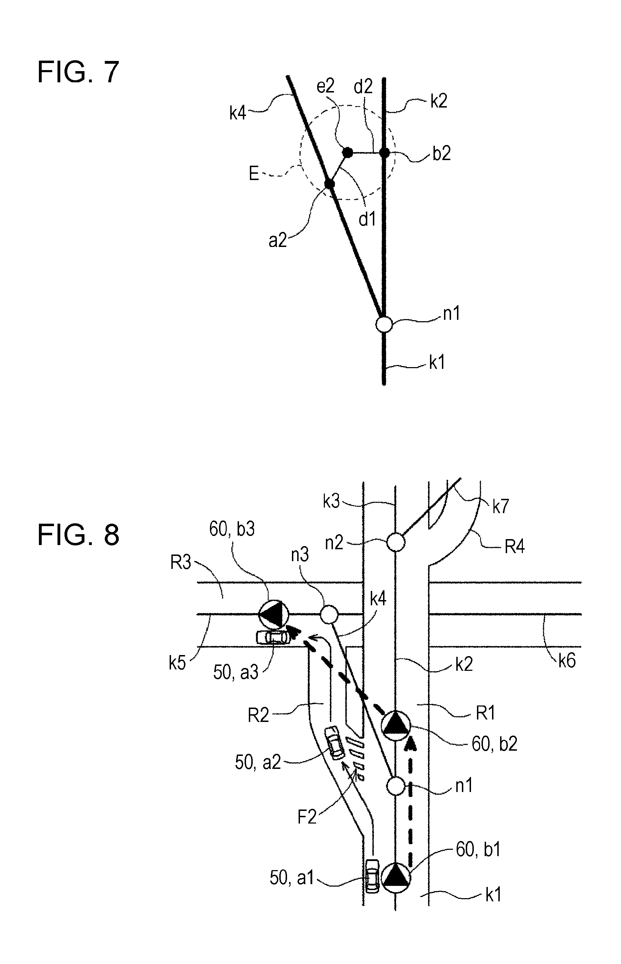

As described above, the vehicle-position-information-acquisition unit 11 acquires the vehicle-position information P (vehicle-position-information-acquisition procedure: #1). Further, the road-information-acquisition unit 12 acquires the road information R (road-information-acquisition procedure: #2). The link-determination unit 13 determines the link k where the vehicle 50 travels based on the acquired vehicle-position information P and the acquired road information R. Hereinafter, the method of determining the link k, the method being performed by the link-determination unit 13, will be described with reference to specific examples. Fig. 7 illustrates link determination performed at the narrow-angle-branch point shown in each of Figs. 4 and 5.

According to an example shown in Fig. 7, the vehicle-position information P which is not yet corrected by the vehicle-position-information-correction unit 14 is acquired as information indicating a position e2. Further, the vehicle-position information P includes information about an error area E. If the position indicated by the vehicle-position information P corresponds to the position e2, both the link k2 defined on the trunk line and the link k4 branched off the node n1, which is the narrow-angle-branch point, fall within the error area E. Therefore, in that state, the link-determination unit 13 determines the link k where the vehicle 50 travels based on a coefficient D expressing each of a distance d2 from the position e2 indicated by the vehicle-position information P to the link k2 and a distance d1 from the position e2 to the link k4 and the general-priority information Rb. Here, the link-determination unit 13 calculates the value of the coefficient D denoting the distance d1 from the position e2 to the link k4 as 5.0, for example. On the other hand, the coefficient D denoting the distance d2 from the position e2 to the link k2 is calculated as 5.0, for example.

The road information R acquired by the road-information-acquisition unit 12 includes the general-priority information Rb indicating the priority of the link k provided at the above-described branch point. The general-priority information Rb is determined based on the road attribute and indicates the priority of each of the links k, where the priority information is used to determine and select the link k where the vehicle 50 travels from among plural links branched out. Preferably, the above-described general-priority information Rb is, for example, information about the priority of each of the links k branched out at the branch point, where each of the priorities is determined based on the degree of vehicle-travel possibility of each of the links k, based on general conditions including the road type, the road width, etc., where information about the above-described conditions is included in the attribute information of each of the links k. If the road R1 indicated by the link k2 is the trunk line and the road R3 indicated by the link k4 is the service road, as shown in Figs. 4 and 5, the general-priority information Rb indicates that the value of the link k2 is 8.0 and the value of the link k4 is 2.0. The link-determination unit 13 calculates the matching degree as below by using the coefficient D of the distance to the link k and the general-priority information Rb.

$$k2: \quad D \times Rb = 5.0 \times 8.0 = 40.0$$

$$k4: \quad D \times Rb = 5.0 \times 2.0 = 10.0$$

Thus, the matching degree attained by the link k4 where the vehicle 50 actually travels becomes lower than that attained by the link k2 extending along the link k4. Consequently, the link-determination unit 13 determines the link k2 to be the link k where the vehicle 50 travels.

On the other hand, the image-information-acquisition unit 10 acquires the image information G about images of surroundings of the vehicle, the images being picked up by the image-pickup device 6 (#4: image-information-acquisition procedure). Then, the image-recognition unit 16 recognizes an image of the recognition target, the image being included in the acquired image information G (#5: image-recognition procedure). According to examples shown in Figs. 4 and 5, an image of the road marking F1 is recognized and the recognition result is temporarily stored as the recognition information V (#7). In the above-described embodiment, information about a recognition result indicating that the image of the road marking F1 is recognized is temporarily stored as the recognition information V. Both procedures #7 and #5 that are shown in Fig. 6 correspond to the image-recognition step according to an embodiment of the present invention. Further, a determination procedure #6 may be provided before the procedure #7, so as to determine whether or not an image of some recognition target is recognized and if it is determined that the image recognition is performed, the recognition information V including data on the recognized image is stored temporarily. The procedures #1 to #3 and the procedures #4 to #7 that are shown in Fig. 6 may be performed in parallel with each other.

Next, the history-information-generation unit 15 determines whether or not a predetermined storage section used to generate the travel-history information C is ended (#8). As described above, the predetermined storage section is, for example, a section extending from the link k shown in the travel-history information C to another link, where the road information R shows no connection relationship between the link k and the another link, which means the occurrence of the "position skip", and/or a section extending from the link k to the next narrow-angle-branch point along a direction in which the vehicle travels. A link sequence indicated by the travel-history information C that can be currently generated is shown as link k1 → link k2. The above-described link sequence does not satisfy conditions for finishing the above-described storage section. Therefore, at a procedure #8, the result of determination made by the history-information-generation unit 15 is "NO". The above-described procedures #1 to #7 are performed repeatedly until the predetermined storage section is ended.

When the vehicle reaches the position a3 shown in Fig. 5, the link k included in the error area E is the link k5 only. Therefore, if the link determination is performed in the above-described manner, the link k where the vehicle 50 travels is determined to be link k5. In that case, the road information R shows that there is no connection relationship between the links k2 and k5, which indicates that the "position skip" occurred between the links k2 and k5. Due to the occurrence of the position skip, the history-information-generation unit 15 determines that the storage section is ended (#8). Then, the history-information-generation unit 15 generates a link sequence expressed as "k1 → k2 → k5" as the travel-history information C (#9). The travel-history information C may include information about a link sequence indicating the order in which the links k determined in the above-described manner appear, or a link sequence indicating an actual route. In the above-described embodiment, the travel-history information C may include information about a link sequence indicating the order in which the links k determined by the link-determination unit 13 appear irrespective of an actual travel route. The procedure #9 and/or the procedure #9 including the procedure #8 corresponds to the history-information-generation step according to an embodiment of the present invention.

The generated travel-history information C is associated with the recognition information V indicating the result of recognition of the recognition target, the recognition being performed during the image-recognition procedure, and stored in the learning database DB2 (#10: history-information-storage procedure). The travel-history information C is stored and stored by performing the above-described processing each time the vehicle passes the same branch point. When the vehicle passes the same branch point a plurality of times, the following information indicating the travel ratio of the vehicle 50 is associated with the recognition information V and stored in the learning database DB2.

V1: Road marking F1 is recognized;

C1: k1 → k2 → k5 : 78%
C2: k1 → k4 → k5 : 22%
C3: k1 → k2 → k3 : 0%
C4: k1 → k4 → k3 : 0%

V2: Road marking F1 is not recognized;

C1: k1 → k2 → k5 : 7%
C2: k1 → k4 → k5 : 2%
C3: k1 → k2 → k3 : 90%
C4: k1 → k4 → k3 : 1%

The learning unit 18 generates the learning-priority information Rc indicating the priorities of the links k based on the travel-history information items C1 to C4 and the recognition information items V1 and V2, where the priorities are used by the link-determination unit 13, so as to determine and select the link k where the vehicle 50 travels from among the links k branched out at the branch point (#11: learning procedure). According to the travel-history information items C1 to C4 stored in the learning database DB2, the ratio at which the vehicle travels to the plural links k, that is, the link k2 and the link k4 that are branched out at the branch point becomes as below according to the recognition information V.

V1: Road marking F1 is recognized;

k1 → k2 : 0%
k1 → k4 : 100%

V2: Road marking F1 is not recognized;

k1 → k2 : 91%
k1 → k4 : 9%

The learning unit 18 generates the learning-priority information Rc showing the priority given to each of the links k2 and k4 based on the above-described travel ratio and whether or not the image of the road marking F1 is recognized, the road marking F1 being provided as the recognition target. According to the above-described embodiment, the learning-priority information Rc is generated as below, as coefficients.

V1: Road marking F1 is recognized;

k1 → k2 : 0.0
k1 → k4 : 10.0

V2: Road marking F1 is not recognized;

k1 → k2 : 9.1
k1 → k4 : 0.9

After the learning procedure is performed, that is, the learning-priority information Rc is generated, the link determination is performed as below each time the vehicle 50 passes the same branch point. Hereinafter, an example where the learning-priority information Rc is used for achieving the link determination shown in Fig. 7 will be described. The coefficient D of the distance to the link k and the general-priority information Rb are the same as those of the above-described embodiment. Namely, the coefficient D of the distance is expressed by the expression d1 = d2 = 5.0. Further, according to the general-priority information Rb, k1 → k2 is 8.0, and k1 → k4 is 2.0. The link-determination unit 13 calculates the matching degree as below by using the coefficient D of the distance to the link k, the general-priority information Rb, and the learning-priority information Rc.

V1: Road marking F1 is recognized;

$$k2 \quad : \quad D \times Rb \times Rc = 5.0 \times 8.0 \times 0.0 = 0.0$$

$$k4 \quad : \quad D \times Rb \times Rc = 5.0 \times 2.0 \times 10.0 = 100.0$$

V2: Road marking F1 is not recognized;

$$k2 \quad : \quad D \times Rb \times Rc = 5.0 \times 8.0 \times 9.1 = 364.0$$

$$k4 \quad : \quad D \times Rb \times Rc = 5.0 \times 2.0 \times 0.9 = 9.0$$

Thus, when the recognition information V indicates that the image of the road marking F1 is recognized, the matching degree attained at the link k4 where the vehicle actually travels becomes higher than that attained at the link k2 extending along the link k4. Consequently, the link-determination unit 13 determines the link k4 to be the link k where the vehicle travels. Namely, an adequate link k is determined to be the link k where the vehicle 50 travels based on the result of recognition of the image of the road marking F1 which is the recognition target.
On the other hand, when the recognition information V indicates that the image of the road marking F1 is not recognized, the matching degree attained at the link k2 becomes higher than that attained at the link k4. When the vehicle 50 travels along the road R2 corresponding to the link k2, the image of the road marking F1 is not recognized so that an adequate link k is determined. However, even though the image of the road marking F1 is not recognized, the vehicle 50 often travels along the link k4 so that erroneous matching occurs. However, as described above, the image of the road marking F1 which is the recognition target is not recognized and the travel ratio at which the vehicle 50 travels along the link k4 is about 9%. The possibility of the erroneous matching depends on a probability that the image-recognition unit 16 does not recognize the road marking F1 even though the vehicle 50 travels over the road marking F1 and a frequency with which the vehicle 50 travels along the link k. Therefore, the above-described erroneous matching is so reduced that no actual problem occurs due to the erroneous matching. Namely, the erroneous matching is significantly reduced than in the past.
In the above-described embodiment, the learning-priority information Rc is used in addition to the general-priority information Rb. However, the matching degree may be determined by using the learning-priority information Rc in place of the general-priority information Rb. In that case, the matching degree is calculated as below.

V1: Road marking F1 is recognized;

$$k2 \quad : \quad D \times Rb \times Rc = 5.0 \times 0.0 = 0.0$$

$$k4 \quad : \qquad D \times Rb \times Rc = 5.0 \times 10.0 = 50.0$$

V2: Road marking F1 is not recognized;

$$k2 \quad : \qquad D \times Rb \times Rc = 5.0 \times 9.1 = 45.5$$

$$k4 \quad : \qquad D \times Rb \times Rc = 5.0 \times 0.9 = 4.5$$

Second Embodiment

In the above-described embodiment (referred to as the first embodiment), the travel-history-information items C1 to C4 shown in Figs. 4 and 5 are stored in the database DB2 based on the recognition result indicated by the recognition information V. However, without being limited to the above-described embodiment, the travel-history-information items C1 to C4 may be stored in the database DB so that whether or not the road marking F1 is recognized is indicated for each of link sequences indicating the travel history as below.

C1: k1 → k2 → k5:    V1: road marking F1 is recognized : 90% V2: road marking F1 is not recognized : 10%
C2: k1 → k4 → k5:    V1: road marking F1 is recognized : 90% V2: road marking F1 is not recognized : 10%
C3: k1 → k2 → k3:    V1: road marking F1 is recognized : 0% V2: road marking F1 is not recognized : 100%
C4: k1 → k4 → k3:    V1: road marking F1 is recognized : 0% V2: road marking F1 is not recognized : 100%

According to the travel-history information items C1 to C4 and the recognition information items V1 and V2 that are stored in the learning database DB2, the ratio at which the vehicle 50 travels to the plural links k, that is, the link k2 and the link k4 that are branched out at the branch point becomes as below according to the recognition result indicated by the recognition information V.

k1 → k2:

V1: road marking F1 is recognized : 90%
V2: road marking F1 is not recognized : 10%

k1 → k4:

V1: road marking F1 is recognized : 0%
V2: road marking F1 is not recognized : 100%

That is to say, the road marking F1 is not necessarily recognized each time the vehicle 50 travels to the link k2. Further, the road marking F1 is not necessarily recognized each time the vehicle 50 travels to the link k4. That is to say, the vehicle 50 travels along the link k4 at a ratio of 10% even though the road marking F1 is not recognized. Therefore, the learning-priority information Rc is generated based on the recognition information V, as is the case with the first embodiment. Depending solely on the above-described description, the vehicle travels to the link k2 and the link k4 at the following ratios.

V1: Road marking F1 is recognized;

k1 → k2 : 0.0
k1 → k4 : 9.0

V2: Road marking F1 is not recognized;

k1 → k2 : 10.0

k1 → k4 : 1.0

If the ratios at which the vehicle 50 travels to the links k2 and k4 are calculated, as is the above-described first embodiment, the vehicle 50 travels to the links k2 and k4 as below.

V1: Road marking F1 is recognized;

k1 → k2 : 0.0
k1 → k4 : 10.0

V2: Road marking F1 is not recognized;

k1 → k2 : 9.1
k1 → k4 : 0.9

Thus, the same learning-priority information Rc as that obtained in the above-described first embodiment can be obtained.

Other Embodiments

(1)

According to the above-described embodiments, the learning-priority information Rc is generated based on whether or not the image of the recognition target is recognized at the branch point, the above-described image recognition being indicated by the recognition information V, and the ratio at which the vehicle travels, the ratio being obtained at the branch point. However, without being limited to the above-described embodiments, the learning-priority information Rc may be generated at the branch point indicated by the recognition information based on the position where the recognition target is recognized and the ratio at which the vehicle passes the branch point. For example, when a road marking F2 which is the recognition target is provided across the boundary of two branching roads, as shown in Fig. 8, and when the vehicle 50 travels along the road R1, the image of the road marking F2 is recognized in an area defined in the left region of the image of the image information G. Further, when the vehicle 50 travels along the road R2, the image of the road marking F2 is recognized in an area defined in the right region of the image of the image information G. That is to say, the learning-priority information Rc can be generated based on at which position specified on the image of the image information G the same recognition target is recognized.

(2)

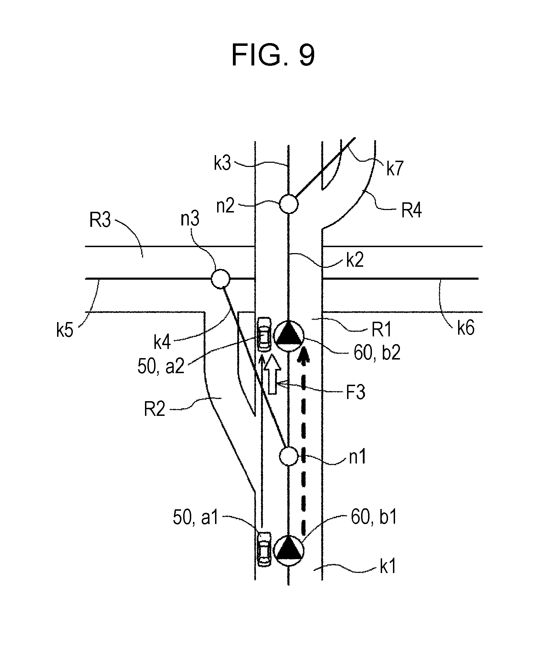

According to the above-described embodiments, the road marking F1 which is the recognition target is provided on the road R2 to which the position of the vehicle 50 is easily matched by mistake through known link determination. Of course, without being limited to the above-described embodiments, the learning-priority information Rc may be generated by determining a road marking F3 to be the recognition target, where the road marking F3 exists on the road R1 to which the position of the vehicle 50 is hardly matched by mistake, as shown in Fig. 9.

(3)

According to the above-described embodiments, the road information R stored in the map database DB1 includes the general-priority information Rb and the learning-priority information Rc. However, without being limited to the above-described embodiment, the general-priority information Rb may be generated by the general-priority-information-acquisition unit each time the link-determination unit 13 determines the link k where the vehicle 50 travels. According to the above-described embodiments, the road-information-acquisition unit 11 has the function of the general-priority-acquisition unit. According to this embodiment, however, another function unit is provided, so as to generate the general-priority information based on the road-attribute information Ra or the like. Otherwise, the link-determination unit 13 may function as the general-priority-acquisition unit. Further, the learning-priority information Rc may not be generated by the learning unit 18 and stored in the map database DB1 in advance. Namely, the learning-priority information Rc may be generated by the learning unit 18 each time the link-determination unit 13 determines the link k where the vehicle 50 travels based on the travel-history information C stored in the learning database DB2.

(4)

According to the above-described embodiments, the learning-priority information Rc and the general-priority information Rb are used as the priority of each of the links k, so as to determine the link k where the vehicle 50 travels. However, without being limited to the above-described embodiments, the priority of each of the links k may be determined by using other conditions in addition to the above-described information items Rc and Rb. For example, if a route to the destination point is determined by the navigation-calculation unit 20, links where the vehicle travels may be determined by using determined-route-priority information used to increase priorities of the links k provided along the determined route. The above-described configuration also constitutes an embodiment of the present invention.

(5)

According to the above-described embodiments, a feature existing on the road surface, that is, the road marking provided on the road surface has been described as the recognition target. However, without being limited to the above-described embodiments, the feature existing on the road surface may include a stain on the road surface, soil on the road surface, cracks in the road surface, seams of a pavement, the lid of a manhole, etc. that can be determined to be the recognition target. The border between the stains, the soil, the cracks, etc. in the road surface and the road surface can be extracted as an edge component by subjecting the image information G to known Gaussian filtering or the like. If the above-described edge component is determined to be the recognition target, the varying number of extracted edge components can be determined to be a characteristic amount as the recognition result. Of course, the shape of the feature may be recognized based on detected edge components and determined to be the characteristic amount. Further, without being limited to the feature existing on the road surface, the recognition target may be a road sign and/or an information sign.

Thus, according to an embodiment of the present invention, a vehicle-position-recognition device that can accurately determine and select a link where a vehicle travels from among plural links branched out at a branch point, particularly, a narrow-angle-branch point can be provided.

[Industrial applicability]

The present invention can be used for a navigation apparatus or the like and can be applied to a vehicle-position-recognition apparatus recognizing the position of an vehicle.

As described above, history-information-generation unit 15 generating travel-history information indicating a route where a vehicle travels at a link-branch point based on a link determined by a link-determination unit 13 determining a link where the vehicle travels based on vehicle-position information and first and second road information items is provided. An image-recognition unit 16 recognizing the image of a recognition target on which data is included in image information about the vehicle's surroundings is provided. The travel-history information is stored in a learning database DB2 in association with recognition information showing the recognition result of the recognition target. A learning unit 18 generates learning-priority information indicating the priority of each link based on the travel-history information and the recognition information for the link-determination unit selecting the link where the vehicle travels from among links branched out at the branch point.

**Claims**

1.  A vehicle-position-recognition apparatus comprising:

    a vehicle-position-information-acquisition unit (11) configured to acquire vehicle-position information indicating a current position of an vehicle;
    a road-information-acquisition unit (12) configured to acquire road information indicating at least one road based on a connection relationship between plural links;
    a link-determination unit (13) configured to determine a link where the vehicle travels based on the vehicle-position information and the road information;
    a history-information-generation unit (15) configured to generate travel-history information indicating a route where the vehicle travels at a point where a link is branched based on the determined link;
    an image-information-acquisition unit (10) configured to acquire image information about surroundings of the vehicle;
    an image-recognition unit (16) configured to recognize at least one image of a recognition target on which data is included in the image information;

a history-information-storage unit (DB2) configured to store the generated travel-history information in association with recognition information indicating a result of recognition of the recognition target, the recognition being performed by the image-recognition unit; and

a learning unit (18) configured to generate learning-priority information indicating a priority of each link based on the travel-history information and the recognition information that are stored in the history-information-storage unit, the priority being used when the link-determination unit determines the link where the vehicle travels from among plural links branched out at the branch point.

2. The vehicle-position-recognition apparatus according to Claim 1, wherein the history-information-generation unit (15) is configured to store information about a route of the link determined by the link-determination unit from the branch point over at least one predetermined storage section and generates the travel-history information based on the stored link-route information.

3. The vehicle-position-recognition apparatus according to Claim 1, or Claim 2, wherein the learning unit (18) is configured to extract the travel-history information from the history-information-storage unit based on the recognition result, the travel-history information being associated with the recognition information agreeing with the recognition result, and is configured to generate the learning-priority information based on the extracted travel-history information.

4. The vehicle-position-recognition apparatus according to any one of Claims 1 to 3, wherein the learning-priority information shows a priority determined based on whether or not the image of the recognition target is recognized at the branch point indicated by the recognition information, and a travel ratio at which the vehicle travels to each of plural links branched out at the branch point, the travel ratio being determined based on the travel-history information.

5. The vehicle-position-recognition apparatus according to any one of Claims 1 to 3, wherein the learning-priority information shows a priority determined based on a position where the recognition of the recognition target is performed, the recognition being performed at the branch point indicated by the recognition information, and a travel ratio at which the vehicle travels to each of plural links branched out at the branch point, the travel ratio being determined based on the travel-history information.

6. The vehicle-position-recognition apparatus according to any one of Claims 1 to 5, wherein the link-determination unit (13) is configured to determine the link where the vehicle travels by using the learning-priority information.

7. The vehicle-position-recognition apparatus according to any one of Claims 1 to 6, further comprising a general-priority-information-acquisition unit configured to acquire general-priority information that is set based on an attribute of a road and that indicates a priority of each link, where the priority is used when determining the link where the vehicle travels from among the plural links branched out,

wherein the link-determination unit (13) is configured to determine the link where the vehicle travels by using the learning-priority information in addition to the general-priority information, or the learning-priority information in place of the general-priority information.

8. The vehicle-position-recognition apparatus according to any one of Claims 1 to 7, wherein the vehicle-position-information-acquisition unit (11) is configured to correct the vehicle-position information based on a result of the determination of the link where the vehicle travels, the determination being made by the link-determination unit (13) .

9. The vehicle-position-recognition apparatus according to any one of Claims 1 to 8, wherein the history-information-generation unit (15) is configured to determine a route where the vehicle actually travels at the point where the link is branched based on the link determined by the link-determination unit, and to generate the travel-history information indicating the route where the vehicle actually travels.

10. The vehicle-position-recognition apparatus according to any one of Claims 1 to 8, wherein the history-information-generation unit (15) is configured to generate the travel-history information indicating the route based on an order of at least two links determined by the link-determination unit.

11. The vehicle-position-recognition apparatus according to Claim 2, wherein the storage section is a section extending from a first link indicated by the travel-history information to a second link reached with a position skip so that the road information shows no connection relationship between the first and second links.

**12.** The vehicle-position-recognition apparatus according to Claim 2, wherein the storage section extends from the branch point to a next branch point in a direction in which the vehicle travels.

**13.** A navigation apparatus comprising:

the vehicle-position-recognition apparatus according to any one of Claims 1 to 12;
a road-information-storage unit (**DB1**) storing the road information;
plural application programs (**23**) configured to operate by referring to an vehicle-position information recognized by the vehicle-position-recognition apparatus and the road information; and
a guide-information-output unit (**21**, **22**, **24**) configured to output guide information by operating based on the application programs (**23**).

**14.** A vehicle-position-recognition method comprising the steps of:

acquiring vehicle-position information indicating a current position of a vehicle (**#1**);
acquiring road information indicating at least one road based on a connection relationship between plural links (**#2**);
determining a link where the vehicle travels based on the vehicle-position information and the road information (**#3**) ;
generating travel-history information indicating a route where the vehicle travels at a point where a link is branched based on the determined link (**#9**);
acquiring image information about surroundings of the vehicle (**#4**);
recognizing at least one image of a recognition target on which data is included in the image information (**#5**);
storing the generated travel-history information in a history-information-storage unit in association with recognition information indicating a result of recognition of the recognition target, the recognition being performed at the image-recognition step (**#7**); and
generating learning-priority information indicating a priority of each link based on the travel-history information and the recognition information that are stored in the history-information-storage unit, the priority being used when the link where the vehicle travels is determined from among plural links branched out at the branch point at the link-determination step (**#11**).

**15.** A computer program product for a computer, comprising software code portions for performing the steps of claim 14 when the program is run on the computer.

# FIG. 1

FIG. 2

FIG. 3

FIG. 4

FIG. 5

# FIG. 6

```
                    ( START )
                        │
          ┌─────────────┼──────────────────────────┐
          │             ▼                           │
          │   ┌────────────────────┐                │
          │   │ ACQUIRE VEHICLE-   │  ～ #1          │
          │   │ POSITION INFORMATION│                │
          │   └────────────────────┘                │
          │             │                           │
          │             ▼                           │
          │   ┌────────────────────┐                │
          │   │   ACQUIRE ROAD     │  ～ #2          │
          │   │   INFORMATION      │                │
          │   └────────────────────┘                │
          │             │                           │
          │             ▼                           │
          │   ┌────────────────────┐                │
          │   │  DETERMINE LINK    │  ～ #3          │
          │   └────────────────────┘                │
          │             │                           │
          │             ▼                           │
          │   ┌────────────────────┐                │
          │   │  ACQUIRE IMAGE     │  ～ #4          │
          │   │  INFORMATION       │                │
          │   └────────────────────┘                │
          │             │                           │
          │             ▼                           │
          │   ┌────────────────────┐                │
          │   │  RECOGNIZE IMAGE   │  ～ #5          │
          │   └────────────────────┘                │
          │             │                           │
          │             ▼                           │
          │   ┌────────────────────┐                │
          │   │ STORE RECOGNITION  │  ～ #7          │
          │   │   INFORMATION      │                │
          │   └────────────────────┘                │
          │             │              #8           │
          │             ▼                           │
          │         ╱───────────╲                   │
          │        ╱ IS STORAGE   ╲   NO            │
          └───────< SECTION ENDED? >────────────────┘
                   ╲             ╱
                    ╲───────────╱
                        │ YES
                        ▼
               ┌────────────────────┐
               │ GENERATE TRAVEL-   │  ～ #9
               │ HISTORY INFORMATION│
               └────────────────────┘
                        │
                        ▼
               ┌────────────────────┐
               │  STORE TRAVEL-     │  ～ #10
               │ HISTORY INFORMATION│
               └────────────────────┘
                        │
                        ▼
               ┌────────────────────┐
               │ GENERATE LEARNING- │  ～ #11
               │ PRIORITY INFORMATION│
               └────────────────────┘
                        │
                        ▼
                    (  END  )
```

25

FIG. 7

FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007171892 A
- JP 2005292082 A

- JP 2006017644 A
- JP 2006284254 A